# FASCICULE DE BREVET EUROPEEN

(11) **EP 3 127 295 B1**
(45) Date de publication et mention de la délivrance du brevet: **01.12.2021**
(21) Numéro de dépôt: 15717025.9
(22) Date de dépôt: 20.03.2015
(51) Int. Cl.: H04L 29/06, H04L 12/24, H04L 29/12

(54) **PROCEDE DE COMMUNICATION PAR CHEMINS MULTIPLES ENTRE DEUX TERMINAUX**
VERFAHREN ZUR KOMMUNIKATION DURCH MEHRERE WEGE ZWISCHEN ZWEI ENDGERÄTEN
METHOD OF COMMUNICATION BY MULTIPLE PATHS BETWEEN TWO TERMINALS

(30) Priorité: 31.03.2014 FR 1452844
(43) Date de publication de la demande: 08.02.2017
(73) Titulaire: ORANGE, 92130 Issy-les-Moulineaux (FR)
(72) Inventeur: BOUCADAIR, Mohamed, F-35830 Betton (FR); JACQUENET, Christian, F-35131 Pont-pean (FR)
(86) Numéro de dépôt international: PCT/FR2015/050708
(87) Numéro de publication internationale: WO 2015/150659

(56) Documents cités:
- WING R RAVINDRANATH T REDDY CISCO A FORD UNAFFILIATED R PENNO CISCO D: "Multipath TCP (MPTCP) Path Selection using PCP; draft-wing-mptcp-pcp-00.txt", MULTIPATH TCP (MPTCP) PATH SELECTION USING PCP; DRAFT-WING-MPTCP-PCP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 octobre 2013 (2013-10-07), pages 1-10, XP015095076,
- WILLIAMS AKAMAI B ET AL: "Experimental Option for TCP Host Identification; draft-williams-exp-tcp-host-id-opt-02.txt" , EXPERIMENTAL OPTION FOR TCP HOST IDENTIFICATION; DRAFT-WILLIAMS-EXP-TCP-HOST-ID-OPT-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 février 2014 (2014-02-12), pages 1-9, XP015096678,
- WING D ET AL: "Port Control Protocol (PCP); rfc6887.txt", PORT CONTROL PROTOCOL (PCP); RFC6887.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 avril 2013 (2013-04-30), pages 1-88, XP015090359, cité dans la demande

## Description

La présente invention concerne le domaine des télécommunications, et notamment les réseaux de communications mettant en œuvre le protocole IP (Internet Protocol). Plus particulièrement, la présente invention concerne la fourniture de services dans les réseaux IP à valeur ajoutée, c'est-à-dire des réseaux capables d'effectuer des traitements de trafic différenciés selon la nature du trafic de données acheminé dans le réseau.

L'invention s'applique à tout type de dispositif-client tel qu'un terminal fixe ou mobile, ou une passerelle domestique (« *Residential Gateway* » en anglais) ou une passerelle située dans une entreprise, ou encore une passerelle d'opérateur réseau (« *Gateway* » en anglais). Par souci de concision, un dispositif-client de n'importe quel type sera souvent appelé « terminal » ci-après.

Les terminaux, tels que les téléphones intelligents (« *smartphones* » en anglais) et les ordinateurs personnels (« *Personal Computers* », ou PC en anglais) sont désormais capables d'exploiter plusieurs interfaces logiques liées à une ou plusieurs interfaces physiques. De tels terminaux sont dits « multi-interfaces » (« *Multi-Interface* », ou MIF en anglais).

Plusieurs adresses IP peuvent alors être attribuées à ces terminaux MIF pour se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique). Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique locale (*Unique Local Address*, ou ULA en anglais), ou adresse IPv6 de portée globale (*Global Unique Address*, ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, et ainsi de suite. Un dispositif peut devenir MIF en cours d'établissement d'une connexion simple (c'est-à-dire, le long d'un chemin unique avec son correspondant), voire après l'établissement d'une connexion simple. De plus, un dispositif ne sait pas a priori s'il lui est possible d'utiliser plusieurs chemins distincts pour établir une communication avec un correspondant ; en effet, cette information ne lui devient disponible (le cas échéant) qu'à l'issue d'une phase au cours de laquelle il tente d'établir une connexion à chemins multiples avec son correspondant.

On rappelle que le protocole TCP (initiales des mots anglais « *Transmission Control Protocol* » signifiant « Protocole de Contrôle de Transmission »), défini notamment dans la spécification RFC 793 de l'IETF (Internet Engineering Task Force), est l'un des protocoles principaux utilisé par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Il fonctionne au niveau de la couche transport du modèle OSI. Les navigateurs Web utilisent TCP lorsqu'ils se connectent à des serveurs distants ; le protocole TCP est aussi utilisé pour acheminer du courrier électronique et pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une session TCP est identifiée par l'adresse et le numéro de port du terminal source, ainsi que l'adresse et le numéro de port du terminal de destination.

Deux terminaux peuvent insérer ce que l'on appelle des « options TCP » dans les messages TCP échangés entre eux, afin, par exemple, d'optimiser la qualité de la transmission TCP. De telles options occupent l'espace disponible en fin d'en-tête TCP, et ont une longueur (« *length* » en anglais) exprimée en octets. Le type d'option (« *kind* » en anglais) est un identifiant unique descriptif de la nature de l'option TCP. Par exemple, la valeur « 0 » indique la fin de la liste des options, et la valeur « 2 » indique la taille maximum (« *Maximum Segment Size* », ou MSS en anglais) du segment TCP.

L'avènement des terminaux MIF introduit une complexité supplémentaire pour utiliser tout ou partie des adresses IP allouées via les réseaux disponibles. Notamment, étant donné que les connexions TCP sont associées à une adresse IP et un numéro de port, toute modification de ces informations est de nature à pénaliser le fonctionnement d'une connexion TCP en cours, et, partant, le service utilisant ladite connexion TCP. Ce changement est particulièrement préjudiciable lorsque le terminal se voit attribuer une nouvelle adresse IP, ou parce que le terminal se connecte à un autre réseau, ou encore lorsque l'interface à laquelle l'adresse IP est associée n'est plus disponible. Par exemple, des moyens pour informer un correspondant TCP distant, par exemple, qu'une adresse IP n'est plus valide, sont alors nécessaires pour assurer le maintien d'une connexion existante.

Le groupe de travail *mptcp* de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole dit « MPTCP » (*Multi-Path TCP*) (cf. A. Ford, C. Raiciu et M. Handley, « TCP Extensions for Multipath Operation with Multiple Addresses », RFC 6824, janvier 2013), que certains téléphones intelligents et certains systèmes d'exploitation sont déjà capables de mettre en œuvre. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP liés à de telles modifications d'adressage, et plus généralement pour répondre aux exigences posées par un contexte où un terminal a la capacité de se raccorder à un ou plusieurs réseaux via plusieurs interfaces. Le protocole MPTCP répond notamment au besoin d'assurer une continuité de session en cas de mobilité du terminal. Différents cas d'usage peuvent être envisagés pour le protocole MPTCP, tels que :
- transférer du trafic entre plusieurs points d'accès WLAN,
- décharger un réseau mobile, et basculer le trafic vers un point d'accès WLAN,
- agréger plusieurs liens d'accès,
- répartir la charge entre plusieurs chemins, et
- optimiser l'utilisation des ressources réseau.

On rappelle à cet égard (cf. Wikipedia) que « l'agrégation de liens » est, dans le domaine des réseaux, une notion décrivant le regroupement de plusieurs interfaces réseau comme s'il s'agissait d'une seule, dans le but d'accroître le débit au-delà des limites d'un seul lien, et éventuellement de faire en sorte que d'autres interfaces prennent le relais si un lien tombe en panne (principe de redondance).

Le document de W.R. Ravindranath et al. intitulé « Multipath TCP (MPTCP) Path Selection using PCP; draft-wing-mptcp-pcp-00.txt », édité par l'IETF, permet de communiquer à une pile MPTCP des caractéristiques réseau des différents liens en utilisant le protocole PCP (Port Control Protocol).

Un exemple particulièrement avantageux d'application du protocole MPTCP est le transfert de fichiers volumineux utilisant les ressources du protocole FTP (File Transfer Protocol). Un dispositif agissant en tant que client FTP peut dynamiquement exploiter l'ensemble des chemins disponibles qui lui permettent d'accéder à un serveur FTP, pourvu que ce dernier soit apte à mettre en œuvre les différentes connexions MPTCP établies par le client FTP. Le temps de transfert des données est ainsi significativement réduit par rapport à une connexion TCP.

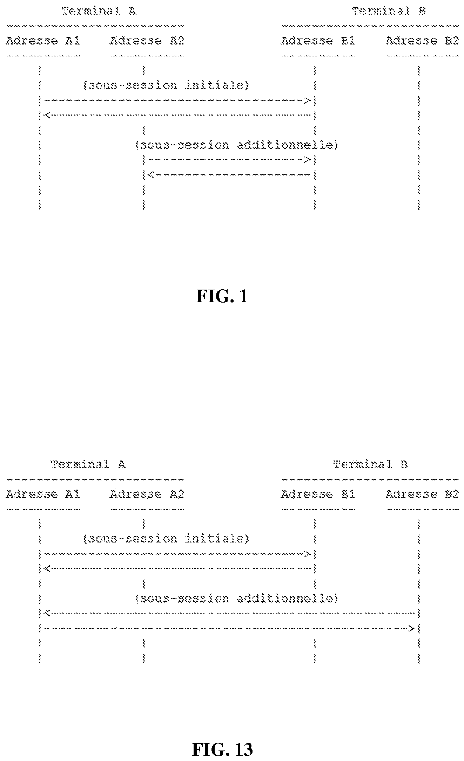

Dans le cadre de MPTCP, on appelle « sous-session » (« *sub-flow* » en anglais) une session TCP reposant sur l'utilisation de l'un des couples (adresse IP/numéro de port) disponibles. De ce fait, une connexion MPTCP est un agrégat de sous-sessions TCP. A titre d'exemple, la **figure 1** montre une connexion MPTCP entre un terminal A et un terminal B ; la sous-session initiale est établie entre l'adresse A1 du terminal A à l'adresse B1 du terminal B ; ultérieurement, une sous-session additionnelle est établie entre l'adresse A2 du terminal A et l'adresse B1 du terminal B.

Les systèmes d'exploitation présentent aux applications des interfaces dédiées, appelées API (Application Programming Interfaces) pour interagir avec la couche TCP/IP. L'API classique pour TCP/IP est l'interface « socket ». Une « socket » est caractérisée par plusieurs « attributs » tels que « Local Socket Address », « Remote Socket Address » et « Protocol ». De nouvelles extensions (API MPTCP) ont été spécifiées par l'IETF dans le document RFC 6897 pour permettre aux applications de contrôler les sessions MPTCP. On notera que l'API MPTCP est une extension de l'API TCP.

Toutes les sous-sessions TCP associées à une même connexion MPTCP peuvent être groupées dans la structure logicielle connue sous le nom de « table de connexions TCP ». En plus des attributs TCP/IP classiques mentionnés ci-dessus, on peut y enregistrer des attributs spécifiques pour MPTCP. La valeur de ces attributs de la table de connexions est contrôlée via l'API MPTCP.

Une connexion MPTCP est initialisée comme n'importe quelle connexion TCP classique, à l'exception du fait que l'option MP_CAPABLE (signifiant que le terminal émetteur est compatible avec les extensions MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide de l'option ADD_ADDR, sans nécessairement créer de sous-session associée.

Toutefois, la signalisation de plusieurs adresses IP disponibles et susceptibles d'être utilisées pour communiquer avec un correspondant peut conduire à un échec de sous-sessions TCP parce que les adresses IP externes telles que perçues par les terminaux distants peuvent ne pas être les mêmes que celles visibles localement. Pour cette raison, l'option ADD_ADDR du protocole MPTCP comprend un identificateur d'adresse (« Address ID ») utilisé pour identifier sans ambiguïté une adresse IP disponible. Cette disposition est censée, selon l'état de l'art, éviter les problèmes induits par la présence d'un NAT (initiales des mots anglais « *Network Address Translator* » signifiant «Traducteur d'Adresse Réseau ») sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewalls* » en anglais). Plus précisément, le protocole MPTCP prescrit que les numéros de séquence tels qu'indiqués dans l'en-tête TCP sont spécifiques à chaque sous-session, tandis que le numéro de séquence indiqué dans l'option DSS (Data Sequence Signal) du protocole MPTCP sert à associer ces sous-sessions à la même connexion MPTCP.

Le protocole MPTCP entend ainsi faire face à la prolifération massive de « *middle boxes* » (dispositifs intermédiaires dans une chaîne de communication), comme les NAT et les pare-feux, dans les réseaux actuels. Or les auteurs de la présente invention ont réalisé que ces précautions ne suffisaient pas à éviter l'échec de l'établissement d'une connexion MPTCP dans certaines configurations, comme on va le montrer à présent sur la base de trois exemples.

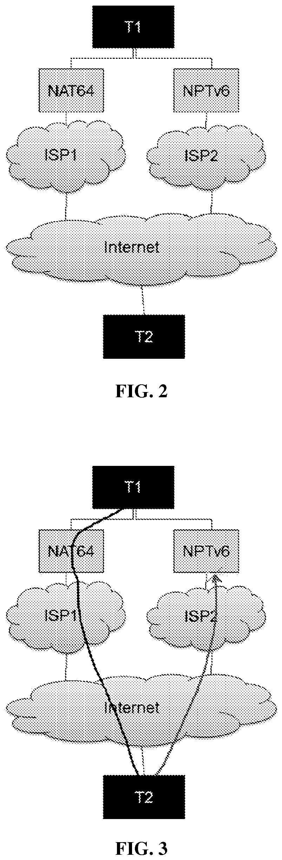

La **figure 2** montre un terminal T1 compatible avec MPTCP, et connecté à l'Internet via deux réseaux ISP1 et ISP2 appartenant à des fournisseurs d'accès distincts. Pour les besoins de cet exemple, on suppose qu'un ou plusieurs préfixes IPv6 ont été alloués à T1. Cependant, T1 n'est pas joignable depuis une machine connectée à Internet en utilisant ces préfixes. En effet, les paquets IP envoyés à des correspondants IPv4 sont interceptés par la fonction NAT64 (« *Network Address and Protocol Translation from IPv6 Clients to IPv4 Servers* »), alors que les paquets IPv6 natifs sont interceptés par la fonction NPTv6 (« *Network Prefix Translation IPv6* »).

Examinons ce qui se passe lorsque le terminal T1 initialise une connexion MPTCP vers un terminal T2 lui aussi compatible avec MPTCP.

Supposons que les paquets envoyés par T1 sont interceptés par la fonction NAT64, et que T1 indique à T2 l'un de ses préfixes IPv6. T2 pourra ajouter des sous-sessions avec T1 en utilisant l'adresse IPv4 de T1 allouée par la fonction NAT64, mais T2 ne pourra pas ajouter de sous-session vers l'un des préfixes IPv6 de T1 car les paquets IPv6 natifs sont interceptés par la fonction NPTv6, comme illustré sur la **figure 3**. La fonction NPTv6 rejette ces paquets car elle ne dispose pas d'entrée dans sa table de traduction pour les traiter.

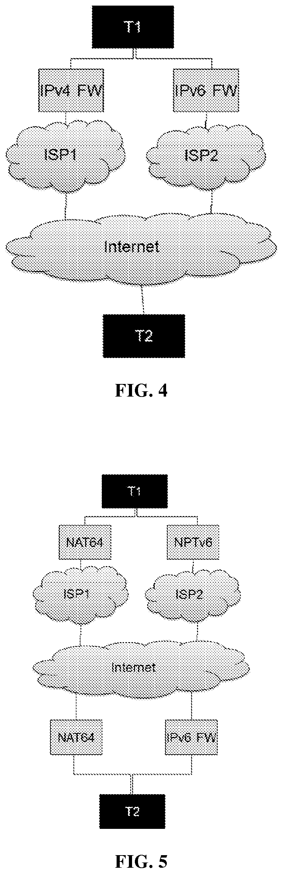

La **figure 4** illustre un deuxième exemple, dans lequel le terminal T1 est connecté à deux réseaux d'accès via un pare-feu IPv4 et un autre pare-feu IPv6. La **figure 5** illustre un troisième exemple, dans lequel à la fois T1 et T2 sont raccordés à l'Internet via plusieurs points de raccordement. Dans ces deux exemples, comme dans le premier, T2 ne pourra pas établir de session TCP vers l'un des préfixes IPv6 de T1.

La présente invention, qui est définie par les revendications 1, 9-13, concerne donc, selon un premier aspect, divers procédés de communication TCP (Transmission Control Protocol) entre un premier dispositif et un second dispositif.

Elle concerne ainsi, premièrement, un procédé de communication TCP comprenant les étapes suivantes :
- ledit second dispositif reçoit de la part dudit premier dispositif ou d'un dispositif-relais connecté au premier dispositif
   - une option TCP mentionnant une adresse IP et/ou un numéro de port, ou
   - une option TCP faisant référence à une adresse IP et/ou à un numéro de port précédemment communiqués au second dispositif, et
- le second dispositif met à jour une table de connexions TCP en renseignant un attribut indiquant que le second dispositif peut utiliser à tout moment ladite adresse et/ou ledit numéro de port pour créer de nouvelles sous-sessions associées à une connexion TCP en cours ou pour tout autre besoin de gestion de ladite connexion TCP en cours.

L'invention concerne aussi, deuxièmement, un procédé de communication TCP comprenant les étapes suivantes :
a) ledit premier dispositif, respectivement un dispositif-relais connecté au premier dispositif, collecte des informations concernant l'existence éventuelle de traducteurs d'adresse réseau et/ou de pare-feux placés en coupure de flux sur au moins un chemin de communication possible entre le premier dispositif et ledit second dispositif et connu du premier dispositif, respectivement dudit dispositif-relais,
b) le premier dispositif, respectivement le dispositif-relais, crée dans au moins un tel traducteur d'adresse réseau et/ou pare-feu une entrée comprenant au moins une adresse IP et/ou au moins un numéro de port du premier dispositif, et
c) le premier dispositif, respectivement le dispositif-relais, transmet au second dispositif
   - une option TCP mentionnant ladite au moins une adresse IP et/ou ledit au moins un numéro de port, et indiquant au second dispositif qu'il peut utiliser à tout moment ladite adresse IP et/ou ledit numéro de port pour créer de nouvelles sous-sessions associées à une connexion TCP en cours ou pour tout autre besoin de gestion de ladite connexion TCP en cours, ou
   - une option TCP indiquant au second dispositif qu'il peut utiliser à tout moment ladite au moins une adresse IP et/ou ledit au moins un numéro de port, qui ont été précédemment communiqués au second dispositif, pour créer de nouvelles sous-sessions associées à une connexion TCP en cours ou pour tout autre besoin de gestion de ladite connexion TCP en cours.

On notera que ladite étape c) suppose naturellement qu'une connexion TCP a été initialisée entre ledit premier dispositif et ledit second dispositif. Cette initialisation peut avoir été effectuée soit avant ladite étape a), soit entre ladite étape b) et ladite étape c).

Grâce à l'invention, le second dispositif est informé qu'il pourra, s'il en a besoin, utiliser sans échec ledit couple (adresse/numéro de port) pour établir une sous-session sur ledit chemin de communication avec le premier dispositif (sans que le premier dispositif ait, par exemple, à envoyer au second dispositif des paquets de données ayant ce couple comme adresse source et numéro de port source). On prévient ainsi l'échec de nouvelles sous-sessions, et l'on permet le basculement sans échec du trafic avec le second dispositif, vers une autre interface du premier dispositif.

On notera que l'invention vise notamment le cas où il existe au moins deux chemins de communication possibles entre les deux dispositifs, même s'il n'existe qu'un seul chemin activable lors de l'initialisation de la connexion TCP.

Selon des caractéristiques particulières, ledit procédé comprend en outre les étapes suivantes :
a') ledit second dispositif, respectivement un dispositif-relais connecté au second dispositif, collecte des informations concernant l'existence éventuelle de traducteurs d'adresse réseau et/ou de pare-feux placés en coupure de flux sur au moins un chemin de communication possible entre le premier dispositif et le second dispositif et connu du second dispositif, respectivement dudit dispositif-relais connecté au second dispositif,
b') le second dispositif, respectivement le dispositif-relais connecté au second dispositif, crée dans au moins un tel traducteur d'adresse réseau et/ou pare-feu une entrée comprenant au moins une adresse IP et/ou au moins un numéro de port du second dispositif, et
c') le second dispositif, respectivement le dispositif-relais connecté au second dispositif, transmet au premier dispositif ladite au moins une adresse IP et/ou ledit au moins un numéro de port, dans une option TCP.

Grâce à ces dispositions :
- l'utilisation de chemins multiples devient symétrique pour les deux parties participant à une connexion : les deux points de terminaison d'une sous-session peuvent ajouter de nouvelles sous-sessions sans risque d'échec ; et
- les ressources réseaux peuvent être agrégées tant du côté de l'initiateur d'une connexion que de son correspondant.

De préférence, l'invention sera mise en œuvre pour *chacun* des chemins de communication possibles entre le premier dispositif et le second dispositif, suite à la découverte de ce chemin par l'un ou l'autre de ces dispositifs.

Selon d'autres caractéristiques particulières, ledit procédé comprend en outre une étape au cours de laquelle le premier dispositif ou le second dispositif transmet à l'autre dispositif une option TCP indiquant à l'autre dispositif qu'il peut utiliser à tout moment une adresse IP et/ou un numéro de port précédemment communiqués audit autre dispositif, pour créer de nouvelles sous-sessions associées à une connexion TCP en cours ou pour tout autre besoin de gestion de ladite connexion TCP en cours. En variante, ou en supplément, ledit procédé comprend en outre une étape au cours de laquelle le premier dispositif ou le second dispositif transmet à l'autre dispositif une option indiquant à l'autre dispositif qu'il peut utiliser à tout moment une adresse IP et/ou un numéro de port, mentionnés dans cette option TCP, pour créer de nouvelles sous-sessions associées à une connexion TCP en cours ou pour tout autre besoin de gestion de ladite connexion TCP en cours.

Grâce à ces dispositions, les bénéfices apportés par l'invention peuvent être maintenus tout au long de la connexion TCP, par exemple suite au rattachement du dispositif émetteur de l'option TCP à un nouveau réseau, ou à l'activation d'une nouvelle interface de ce dispositif émetteur.

On notera qu'un dispositif pourra, le cas échéant, faire connaître à son correspondant une pluralité de nouvelles adresses IP et/ou une pluralité de numéros de port au moyen d'une unique option TCP, mais il est préférable, pour faciliter la gestion de la connexion TCP par le correspondant, de ne lui transmettre au plus qu'une seule nouvelle adresse IP et un seul nouveau numéro de port par option TCP.

Selon d'autres caractéristiques particulières, ledit procédé comprend en outre une étape au cours de laquelle le premier dispositif ou le second dispositif transmet à l'autre dispositif une option TCP indiquant une durée de vie associée à une adresse IP ou un numéro de port précédemment communiqués audit autre dispositif.

Grâce à ces dispositions, ledit correspondant pourra par exemple anticiper certaines actions à effectuer, comme clôturer une sous-session ou basculer le trafic vers une autre sous-session. Par exemple, si un dispositif prévoit que son adresse IP pour une sous-session en cours devra changer (par exemple en raison d'une durée de connexion limitée), il pourra, pour maintenir la communication avec son correspondant, prendre l'initiative de l'en avertir, afin que ce correspondant puisse prendre en compte à l'avance ce changement d'adresse IP.

Selon encore d'autres caractéristiques particulières, ledit procédé comprend en outre une étape au cours de laquelle le premier dispositif ou le second dispositif envoie à l'autre dispositif un message contenant une option TCP pour indiquer audit autre dispositif une préférence du ratio de trafic à émettre vers une adresse IP ou un numéro de port précédemment communiqués audit autre dispositif.

Grâce à ces dispositions, un dispositif pourra indiquer une préférence de répartition de charge entre plusieurs chemins disponibles. C'est notamment vrai pour la réception de données par ce dispositif ; cette possibilité offerte aux terminaux ressortit à une approche dite « politique d'ingénierie de trafic entrant » (« *Inbound Traffic Engineering* » en anglais). Les ressources réseau disponibles sont ainsi avantageusement optimisées.

Corrélativement, l'invention concerne divers dispositifs communicants compatibles avec les communications TCP (Transmission Control Protocol).

Elle concerne ainsi, premièrement, un dispositif communicant possédant des moyens pour :
- recevoir
   - une option TCP mentionnant une adresse IP et/ou un numéro de port, ou
   - une option TCP faisant référence à une adresse IP et/ou à un numéro de port précédemment communiqués audit dispositif communicant, et
- mettre à jour une table de connexions TCP en renseignant un attribut indiquant que le dispositif communicant peut utiliser à tout moment ladite adresse et/ou ledit numéro de port pour créer de nouvelles sous-sessions associées à une connexion TCP en cours ou pour tout autre besoin de gestion de ladite connexion TCP en cours.

L'invention concerne aussi, deuxièmement, un dispositif communicant possédant des moyens pour :
- collecter des informations concernant l'existence éventuelle de traducteurs d'adresse réseau et/ou de pare-feux placés en coupure de flux sur au moins un chemin de communication possible entre un premier dispositif et un second dispositif et connu dudit dispositif communicant,
- créer dans au moins un tel traducteur d'adresse réseau et/ou pare-feu une entrée comprenant au moins une adresse IP et/ou au moins un numéro de port dudit premier dispositif, et
- transmettre audit second dispositif
   - une option TCP mentionnant ladite au moins une adresse IP et/ou ledit au moins un numéro de port, et indiquant au second dispositif qu'il peut utiliser à tout moment ladite adresse IP et/ou ledit numéro de port pour créer de nouvelles sous-sessions associées à une connexion TCP en cours ou pour tout autre besoin de gestion de ladite connexion TCP en cours, ou
   - une option TCP indiquant au second dispositif qu'il peut utiliser à tout moment ladite au moins une adresse IP et/ou ledit au moins un numéro de port, qui ont été précédemment communiqués au second dispositif, pour créer de nouvelles sous-sessions associées à une connexion TCP en cours ou pour tout autre besoin de gestion de ladite connexion TCP en cours.

Selon un autre aspect, l'invention concerne un dispositif-client, tel qu'un terminal d'utilisateur, comprenant un dispositif communicant tel qu'exposé succinctement ci-dessus. Ce dispositif-client peut notamment être ledit premier dispositif lui-même.

Selon encore un autre aspect, l'invention concerne un dispositif-relais, tel qu'un routeur ou une passerelle, comprenant un dispositif communicant tel qu'exposé succinctement ci-dessus. Ledit dispositif-relais peut notamment être connecté audit premier dispositif.

Les avantages offerts par ce dispositif communicant, ce dispositif-client et ce dispositif-relais sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de communication succinctement exposés ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente un agrégat de sous-sessions TCP formant une unique connexion MPTCP,
- la figure 2, décrite ci-dessus, représente un terminal T1 connecté à deux réseaux distincts, l'une des connexions traversant une fonction NAT64 et l'autre traversant une fonction NPTv6,
- la figure 3, décrite ci-dessus, illustre l'échec d'une tentative d'établissement d'une sous-session MPTCP vers le terminal T1 à partir d'un terminal T2,
- la figure 4, décrite ci-dessus, représente un terminal T1 connecté à l'Internet via deux réseaux distincts, l'une des connexions traversant un pare-feu IPv4 et l'autre traversant un pare-feu IPv6,
- la figure 5, décrite ci-dessus, illustre une configuration où à la fois le terminal T1 et le terminal T2 sont raccordés à l'Internet via plusieurs points de raccordement,
- la figure 6 illustre l'option TCP classique ADD_ADDR,
- la figure 7 illustre l'option TCP TRUST selon l'invention,
- la figure 8 illustre l'option TCP TRU_ADD selon l'invention,
- la figure 9 illustre l'option TCP LIFETIME selon l'invention,
- la figure 10 illustre l'option TCP RATIO selon l'invention,
- la figure 11 illustre un exemple de configuration de réseau comprenant trois terminaux T1, T2 et T3,
- la figure 12 illustre le basculement d'une partie du trafic entre un terminal T1 et un terminal T2 d'un premier chemin vers un deuxième,
- la figure 13 illustre une connexion MPTCP au cours de laquelle un terminal crée une nouvelle sous-session, alors qu'il n'a pas été l'initiateur de la connexion MPTCP initiale,
- la figure 14 montre deux terminaux T1 et T3 créant autant de sous-sessions que possible entre eux,
- la figure 15 montre un terminal T3 anticipant l'expiration d'une sous-session existante avec un terminal T1, et basculant le trafic vers une nouvelle sous-session qu'il a créée à cet effet,
- la figure 16 illustre un mode de réalisation dans lequel un dispositif-relais connecte au moins un terminal T1 non compatible MPTCP à une pluralité de réseaux, et
- la figure 17 illustre un mode de réalisation dans lequel un dispositif-relais connecte au moins un terminal T1 compatible MPTCP à une pluralité de réseaux.

L'invention s'applique de manière générale à tout protocole concernant les connexions TCP à chemins multiples. On va décrire à présent l'application de l'invention au protocole MPTCP introduit brièvement ci-dessus.

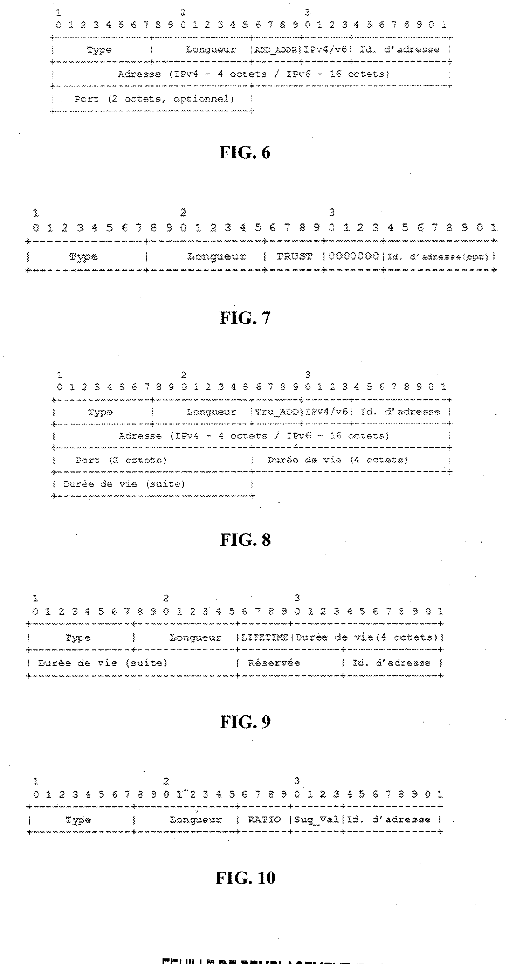

Le protocole MPTCP comprend classiquement un certain nombre de dispositions, dont notamment la définition des options TCP suivantes :
- MP_CAPABLE : cette option est utilisée pour signaler au terminal distant que le terminal émetteur est compatible avec les extensions MPTCP;
- ADD_ADDR : cette option, illustrée sur la **figure 6**, est utilisée pour ajouter une nouvelle adresse ; elle comprend un champ optionnel de deux octets permettant de fournir également, éventuellement, un numéro de port ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

La présente invention propose plusieurs nouvelles options TCP, que l'on va décrire à présent.

L'option TRUST, illustrée par la **figure 7**, est utilisée par un terminal pour indiquer à son correspondant qu'une adresse IP et/ou un numéro de port utilisés lors de la création de la connexion MPTCP peuvent être utilisés à tout moment pour créer de nouvelles sous-sessions, ou pour tout autre besoin de gestion de la connexion MPTCP en cours. Cette indication est une information explicite selon laquelle des dispositions particulières ont été prises pour s'assurer que ladite adresse IP et/ou ledit numéro de port peuvent être utilisés à tout moment pour créer de nouvelles sous-sessions, ou pour tout autre besoin de gestion de la connexion MPTCP en cours. En variante, cette option TRUST peut inclure l'identifiant « Address_ID » associé à une autre adresse et, optionnellement, un autre numéro de port, déjà communiqués au moyen d'une option ADD_ADDR ; cette option TRUST peut dans ce cas être envoyée conjointement à une option ADD_ADDR, ou séparément.

L'option TRU_ADD, illustrée par la **figure 8**, est utilisée par un terminal pour indiquer à son correspondant que l'adresse IP et/ou le numéro de port mentionnés dans cette option peuvent être utilisés à tout moment pour créer de nouvelles sous-sessions, ou pour tout autre besoin de gestion de la connexion MPTCP en cours. Cette option contient également, de préférence, une durée de vie associée aux informations contenues dans l'option. Cette information peut être utilisée par un nœud, par exemple, pour clôturer une sous-session ou basculer le trafic vers une nouvelle sous-session. Cette option est une information explicite selon laquelle des dispositions particulières ont été prises pour s'assurer qu'un chemin est disponible, et qu'aucune erreur ne sera rencontrée si le correspondant utilise les informations contenues dans cette option. Pour renseigner la valeur du champ « Lifetime » (mot anglais signifiant « durée de vie »), un terminal MPTCP peut utiliser la durée d'un bail DHCP (c'est-à-dire le temps maximum d'utilisation d'une adresse IP allouée au terminal par le protocole DHCP (Dynamic Host Configuration Protocol), la durée de vie de *mapping* PCP (Port Control Protocol), la durée de vie de *mapping* UPnP (Universal Plug and Play)/IGD (Internet Gateway Device), ou toute autre information à sa disposition. La valeur « 0 » indique une durée de vie illimitée.

On rappelle à cet égard que l'on appelle « *mapping* » l'association d'une adresse IP interne et d'un numéro de port interne avec une adresse IP externe et un numéro de port externe. Dans le cas d'une fonction NAT, l'adresse IP interne et le numéro de port interne sont les informations servant de données d'entrée, alors que l'adresse IP externe et le numéro de port externe sont alloués par la fonction NAT. Dans le cas d'un pare-feu, les informations internes et externes sont identiques. Un « mapping » peut inclure d'autres informations, telles que l'adresse IP et le numéro de port du correspondant ou un identifiant du protocole de communication utilisé.

L'option LIFETIME, illustrée par la **figure 9**, est utilisée pour indiquer une durée de vie associée aux informations déjà communiquées par le biais de l'option ADD_ADDR ou TRU_ADD. Cette option est notamment utilisée par un terminal :
- pour notifier à son correspondant tout changement de la durée de vie d'une adresse annoncée dans une option ADD_ADDR, ou
- pour notifier tout changement affectant une information déjà communiquée dans une option TRU_ADD.
Pour renseigner la valeur du champ « Lifetime » représentant ladite durée de vie, un terminal peut utiliser un bail DHCP, la durée de vie de *mapping* PCP, la durée de vie de *mapping* UPnP/IGD, ou toute autre information à sa disposition. La valeur « 0 » indique une durée de vie illimitée. Cette option peut être envoyée conjointement à une option ADD_ADDR, ou séparément.

L'option RATIO, illustrée par la **figure 10**, est utilisée par un terminal pour indiquer à son correspondant une préférence du ratio de trafic à émettre vers une adresse ou un numéro de port déjà communiqués par le biais de l'option ADD_ADDR ou de l'option TRU_ADD. Le correspondant peut ou non tenir compte de cette préférence. Le champ « Sug_Val » (initiales des mots anglais « *Suggested Value* » signifiant « Valeur Suggérée ») indique une valeur exprimée en pourcentage (par exemple, la valeur 50 indique une proposition de ratio égale à 50%). Cette option peut être envoyée conjointement à une option ADD_ADDR ou à une option TRU_ADD, ou séparément. Un terminal MPTCP peut envoyer cette option à tout moment pour informer son correspondant de tout changement de politique de répartition de charge. L'absence de cette option dans un échange MPTCP est, de préférence, une indication implicite selon laquelle le terminal n'a aucune préférence de ratio.

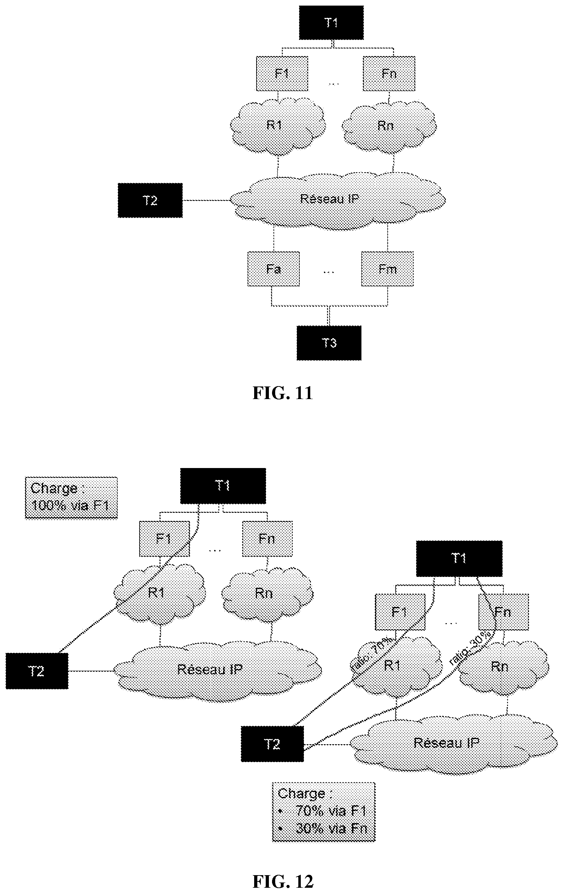

La **figure 11** illustre une configuration de réseau, qui va servir d'exemple pour les modes de réalisation de l'invention décrits ci-dessous.

Cette configuration comprend un terminal T1 connecté à un réseau IP via n fonctions F1, F2,.., Fn (telles que des NAT ou des pare-feux) et n réseaux d'accès R1, R2, ..., Rn respectifs. Cette configuration comprend également un terminal T2 connecté à un réseau IP via un seul point de raccordement ; on suppose que T2 est compatible avec MPTCP, et qu'une adresse IP unique lui a été allouée. Cette configuration comprend également un terminal T3 connecté à un réseau IP via m fonctions Fa, Fb,.., Fm (telles que des NAT ou des pare-feux).

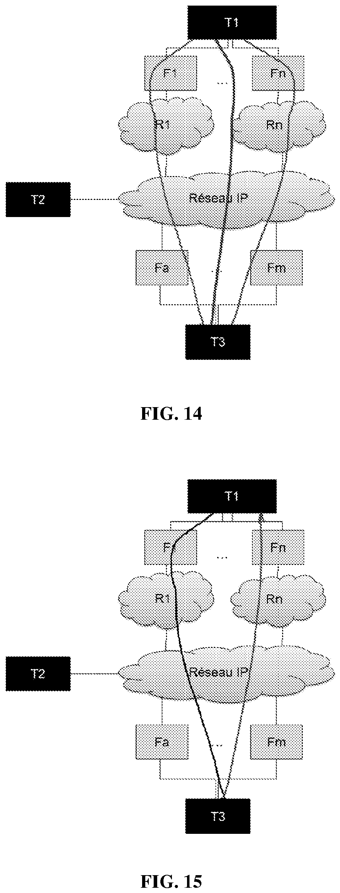

L'invention propose également plusieurs nouveaux attributs à inclure dans les tables de sessions MPTCP, que l'on va décrire à présent.
- SUGGESTED_LOAD_RATIO : ce champ est utilisé pour enregistrer une proposition de répartition de charge sur plusieurs chemins, telle que communiquée par un correspondant. La valeur de cet attribut peut être utilisée par un terminal pour calculer la proportion de trafic à envoyer vers cette adresse ou ce numéro de port. La valeur de cet attribut n'est pas prise en compte si les politiques de répartition de charge locales sont en conflit avec la préférence exprimée par le correspondant. La **figure 12** illustre le cas d'un terminal T1 qui reçoit des données depuis un terminal T2 ; T1 avait utilisé l'option RATIO pour informer T2 qu'il souhaite n'utiliser que le chemin traversant F1 (par exemple parce que la connexion F1 lui coûte moins cher) ; T1 peut décider à présent d'informer T2 de basculer 30% du trafic vers l'interface Fn ; si T2 accepte d'honorer la préférence indiquée par T1, alors 70% du trafic sera maintenu par T2 sur le premier chemin (c'est-à-dire, via F1), alors que 30% sera basculé (de préférence, graduellement) vers le chemin empruntant Fn.
- RELIABILITY : ce champ est valorisé à « 1 » si une adresse et/ou un numéro de port ont été reçus via l'option TRU_ADD, ou si une option TRUST a été reçue pour une adresse et/ou un numéro de port précédemment transmis au moyen d'une option ADD_ADDR. Un terminal s'appuie sur la valeur de cet attribut (égale à « 1 ») pour initialiser de nouvelles sous-sessions, même s'il n'a pas initialisé la connexion MPTCP initiale. La **figure 13** représente une connexion MPTCP au cours de laquelle un terminal B crée une nouvelle sous-session, alors que c'est un autre terminal A qui avait été l'initiateur de la sous-session MPTCP initiale. La **figure 14** montre deux terminaux T1 et T3 créant entre eux autant de sous-sessions que possible, afin de maximiser le débit de transfert de données en fonction des ressources réseau disponibles.
- EXPIRE_DATE : ce champ est valorisé à la valeur renseignée dans le champ « Lifetime » d'une option TRU_ADD ou d'une option LIFETIME. La valeur « 0 » est utilisée pour indiquer qu'une adresse IP ou un numéro de port a une durée de vie illimitée. Un terminal s'appuie sur la valeur de cet attribut, par exemple, pour initialiser de nouvelles sous-sessions, ajuster sa politique de répartition de charge entre les différentes sous-sessions actives, ou pour clôturer les sous-sessions utilisant cette adresse IP. La **figure 15** montre un terminal T3 qui anticipe l'expiration d'une sous-session existante, et qui bascule le trafic vers une nouvelle sous-session qu'il a créée à cet effet.

On notera que l'interface de programmation (« *Application Programming Interface* », ou API en anglais) du protocole MPTCP doit être modifiée pour que l'on puisse transmettre aux applications la valeur des attributs RELIABILITY, SUGGESTED_LOAD, et EXPIRE_DATE décrits ci-dessus.

On va décrire à présent, à titre d'exemple, quatre modes de réalisation concernant les étapes initiales d'une connexion MPTCP, dans lesquels on met en œuvre les options TCP proposées par la présente invention. On notera que les étapes décrites pour chacun de ces modes de réalisation ne doivent pas nécessairement être exécutées dans l'ordre indiqué.

Le premier mode, appelé « Découverte-puis-Connexion » (« *Discover-then-Connect* » en anglais), comprend les étapes suivantes.
1. Un terminal compatible avec le protocole MPTCP procède à la découverte de fonctions NAT ou de pare-feux susceptibles de se trouver en coupure de flux sur le chemin de communication avec des correspondants éventuels. Cette étape de découverte peut par exemple mettre en œuvre à cet effet le protocole PCP (initiales des mots anglais « *Port Control Protocol* ») défini dans la spécification RFC 6887 de l'IETF.
2. Le terminal découvre la liste des adresses IP et numéros de port disponibles pour établir un ensemble de sous-sessions MPTCP avec des correspondants. Ces adresses et numéros de port peuvent être, par exemple, obtenus à l'aide d'un protocole d'allocation d'adresses IP comme DHCP, ou par un mécanisme de création de *mapping,* tel que PCP, STUN ou UPnP. Si le terminal a détecté la présence d'une fonction NAT ou d'un pare-feu, il procède à la création des entrées (*mappings*) nécessaires à la communication avec un correspondant.
3. Le terminal utilise les informations qu'il a collectées, telles qu'une adresse IP, une durée de vie ou une origine d'un couple adresse/numéro de port (par exemple, DHPC, PCP, ou configuration statique) pour initialiser une connexion MPTCP. L'initiateur de la connexion MPTCP ainsi que son correspondant utilisent les options TRUST et TRU_ADD pour se notifier mutuellement la fiabilité des adresses ou numéros de port annoncés dans une option ADD_ADDR ou TRU_ADD. Ils utilisent les options LIFETIME et TRU_ADD pour se notifier mutuellement la durée de vie des adresses ou numéros de port annoncés dans une option ADD_ADDR ou TRU_ADD.
4. Chacun des deux participants à la connexion MPTCP peut utiliser l'option LIFETIME pour notifier l'autre terminal de tout changement de durée de vie d'une adresse ou numéro de port déjà annoncés par une autre option TCP (par exemple, ADD_ADDR ou TRU_ADD).
5. Chacun des deux participants à la connexion MPTCP peut utiliser l'option TRU_ADD pour notifier l'autre terminal de toute nouvelle adresse ou tout nouveau numéro de port, ainsi que la durée de vie de ces informations.
6. Chacun des deux participants à la connexion MPTCP peut utiliser l'option RATIO pour informer l'autre terminal :
   (a) d'une préférence de répartition de charge impactant une adresse ou un numéro de port déjà annoncés par une autre option TCP (par exemple, ADD_ADDR ou TRU_ADD), ou
   (b) de tout changement de fiabilité d'une adresse IP ou d'un numéro de port déjà annoncés via l'option ADD_ADDR ou l'option TRU_ADD.

Le deuxième mode, appelé « Connexion-puis-Découverte » (« *Connect-then-Discover* » en anglais), comprend les étapes suivantes.
1. Un terminal procède aux opérations MPTCP classiques (telles que définies dans la spécification RFC 6824 mentionnée ci-dessus) concernant l'initialisation d'une connexion MPTCP.
2. Chacun des deux correspondants MPTCP procède à la découverte de fonctions NAT ou pare-feux susceptibles de se trouver en coupure de flux sur le chemin de communication avec l'autre terminal, par exemple à l'aide du protocole PCP.
3. Chacun des deux correspondants MPTCP découvre la liste des adresses IP et numéro(s) de port à sa disposition pour établir un ensemble de sous-sessions MPTCP avec l'autre terminal. Ces adresses peuvent être récupérées par un protocole d'allocation d'adresses tel que DHCP, ou par un mécanisme de création de *mapping,* tel que PCP, STUN ou UPnP/IGD. Si le terminal a détecté la présence d'une fonction NAT ou d'un pare-feu, il procède à la création des entrées (*mappings*) nécessaires à la communication avec son correspondant.
4. Chacun des deux correspondants MPTCP utilise les informations qu'il a collectées, telles qu'une adresse IP, une durée de vie ou une origine d'un couple adresse/numéro de port (par exemple, DHCP, PCP, ICE, ou configuration statique) pour construire les options TRUST et TRU_ADD à envoyer pour informer l'autre terminal de la fiabilité des adresses ou numéros de port annoncés dans une option ADD_ADDR ou une option TRU_ADD. Ils utilisent les options LIFETIME et TRU_ADD pour informer l'autre terminal de la durée de vie des adresses ou numéros de port annoncés dans une option ADD_ADDR ou une option TRU_ADD.
5. Chacun des deux correspondants MPTCP peut utiliser l'option LIFETIME pour informer l'autre terminal de tout changement de durée de vie d'une adresse ou un numéro de port déjà annoncée par une autre option MPTCP (par exemple, ADD_ADDR ou TRU_ADD).
6. Chacun des deux correspondants MPTCP peut utiliser l'option TRU_ADD pour informer l'autre terminal de toute nouvelle adresse ou tout nouveau numéro de port, ainsi que la durée de vie de ces informations.
7. Chacun des deux correspondants MPTCP peut utiliser l'option TRUST pour informer l'autre terminal de tout changement de fiabilité d'une adresse IP ou d'un numéro de port déjà annoncés via l'option ADD_ADDR.
8. Chacun des deux participants à la connexion MPTCP peut utiliser l'option RATIO pour informer l'autre terminal
   (a) d'une préférence de répartition de charge impactant une adresse ou un numéro de port déjà annoncés par une autre option MPTCP (par exemple, ADD_ADDR ou TRU_ADD), ou
   (b) de tout changement de fiabilité d'une adresse IP ou d'un numéro de port déjà annoncés par l'option ADD_ADDR ou l'option TRU_ADD.

Dans les deux modes que l'on vient de décrire, on met en œuvre les étapes suivantes.
1. Un correspondant MPTCP ayant reçu l'option TRUST met à jour sa table de connexions TCP en renseignant l'attribut RELIABILITY, décrit ci-dessus, pour y indiquer que l'adresse et/ou le numéro de port concernés sont fiables.
2. Un correspondant MPTCP ayant reçu l'option LIFETIME met à jour ladite table de connexions TCP en renseignant l'attribut EXPIRE_DATE, décrit ci-dessus, pour y indiquer une nouvelle valeur de la date d'expiration de l'adresse ou du numéro de port.
3. Un correspondant MPTCP ayant reçu l'option RATIO met à jour sa table de connexions TCP en renseignant l'attribut SUGGESTED_LOAD_RATIO, décrit ci-dessus, pour indiquer une préférence de répartition de trafic. Cette préférence peut être prise en compte, ou non, par ce terminal.
4. Un correspondant MPTCP ayant reçu l'option TRU_ADD met à jour sa table de connexions TCP en renseignant l'attribut RELIABILITY pour indiquer que l'adresse et/ou le numéro de port concernés sont fiables, et, optionnellement, en renseignant l'attribut EXPIRE_DATE pour sauvegarder la nouvelle valeur de la date d'expiration de l'adresse et/ou du numéro de port.
5. Si l'attribut RELIABILITY est valorisé à « 1 », un terminal peut décider, au sein d'une connexion MPTCP active, de créer de nouvelles sous-sessions associées à l'adresse et/ou au numéro de port concernés.
6. Un terminal surveille la valeur de l'attribut EXPIRE_DATE de sa table de connexions TCP pour prendre des décisions telles qu'anticiper la clôture d'une sous-session, le basculement du trafic vers au moins une autre sous-session active, ou la création d'au moins une autre nouvelle sous-session. Il est recommandé d'anticiper la bascule du trafic, et de se réserver un temps suffisant avant l'expiration attendue pour effectuer les opérations de bascule de trafic.

Selon un troisième mode de réalisation, on utilise un dispositif-relais (« *proxy* » en anglais).

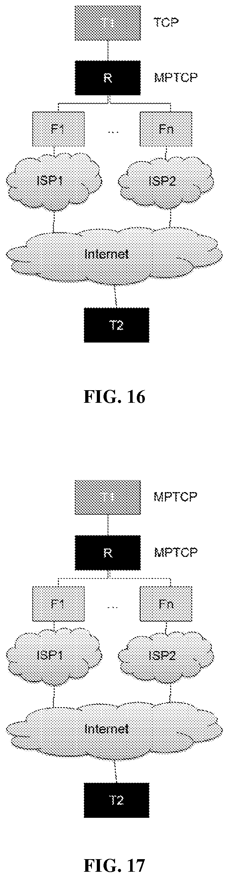

Dans ce troisième mode de réalisation, illustré par la **figure 16**, un dispositif-relais R (par exemple, un routeur ou une passerelle) connecte au moins un terminal T1, non compatible MPTCP, à une pluralité de réseaux. Le dispositif-relais R est, quant à lui, compatible MPTCP ; de plus, il est apte, de manière analogue aux étapes décrites en référence au premier ou au deuxième mode de réalisation décrits ci-dessus, à insérer au moins une option TCP selon l'invention dans un message à destination du terminal T2, ou à prendre en considération au moins une option TCP selon l'invention reçue dans un message provenant du terminal T2, de manière à permettre au terminal T1 de communiquer avec le terminal T2 en bénéficiant des avantages fournis par la présente invention, et ce, en dépit du fait que le terminal T1 n'est pas compatible avec le protocole MPTCP.

Selon un quatrième mode de réalisation, on utilise également un dispositif-relais compatible MPTCP.

Dans ce quatrième mode de réalisation, illustré par la **figure 17**, un dispositif-relais R (par exemple, un routeur ou une passerelle) connecte au moins un terminal T1 à une pluralité de réseaux. Le terminal T1 est mono-interface, mais est néanmoins compatible MPTCP ; il est en particulier apte à informer un correspondant T2 de cette capacité MPTCP. Le dispositif-relais R a connaissance des multiples chemins permettant à T1 de communiquer avec T2. Le dispositif-relais R est apte, de manière analogue aux étapes décrites en référence au premier ou au deuxième mode de réalisation décrits ci-dessus, à insérer ou à modifier au moins une option TCP contenue dans un message émis par le terminal T1 à destination du terminal T2 ou reçu du terminal T2 à destination du terminal T1, de manière à permettre au terminal T1 de communiquer avec le terminal T2 en bénéficiant des avantages fournis par la présente invention, et ce, en dépit du fait que le terminal T1 n'est pas un terminal MIF.

L'invention peut être mise en œuvre au sein de nœuds de réseaux de communications, par exemple des terminaux, des routeurs ou des passerelles, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de communication selon l'invention.

En effet, l'invention vise aussi un programme d'ordinateur téléchargeable depuis un réseau de communication comprenant des instructions pour l'exécution des étapes d'un procédé de communication selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication TCP, Transmission Control Protocol entre un premier dispositif (T1) et un second dispositif (T2), comprenant les étapes suivantes :
a) ledit premier dispositif (T1), respectivement un dispositif-relais (R) connecté au premier dispositif (T1), collecte des informations concernant l'existence éventuelle de traducteurs d'adresse réseau et/ou de pare-feux placés en coupure de flux sur au moins un chemin de communication possible entre le premier dispositif (T1) et ledit second dispositif (T2) et connu du premier dispositif (T1), respectivement dudit dispositif-relais (R),
b) le premier dispositif (T1), respectivement le dispositif-relais (R), crée dans au moins un tel traducteur d'adresse réseau et/ou pare-feu une entrée comprenant au moins une adresse IP et/ou au moins un numéro de port du premier dispositif (T1), et
c) le premier dispositif (T1), respectivement le dispositif-relais (R), transmet au second dispositif (T2)
• une option TCP (TRU_ADD) mentionnant ladite au moins une adresse IP et/ou ledit au moins un numéro de port, et indiquant au second dispositif (T2) qu'il peut utiliser à tout moment sans échec ladite adresse IP et/ou ledit numéro de port pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet, ou
• une option TCP (TRUST) indiquant au second dispositif (T2) qu'il peut utiliser à tout moment sans échec ladite au moins une adresse IP et/ou ledit au moins un numéro de port, qui ont été précédemment communiqués au second dispositif (T2) par le premier dispositif (T1), respectivement le dispositif-relais (R), pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet.

2. Procédé de communication selon la revendication 1, **caractérisé en ce que** ledit premier dispositif (T1) initialise une connexion TCP avec ledit second dispositif (T2) avant ladite étape a).

3. Procédé de communication selon la revendication 1, **caractérisé en ce que** ledit premier dispositif (T1) initialise une connexion TCP avec ledit second dispositif (T2) entre ladite étape b) et ladite étape c).

4. Procédé de communication selon l'une quelconque des revendications 1 à 3, **caractérisé en ce qu'**il comprend en outre les étapes suivantes :
a') ledit second dispositif (T2), respectivement un dispositif-relais connecté au second dispositif (T2), collecte des informations concernant l'existence éventuelle de traducteurs d'adresse réseau et/ou de pare-feux placés en coupure de flux sur au moins un chemin de communication possible entre le premier dispositif (T1) et le second dispositif (T2) et connu du second dispositif (T2), respectivement dudit dispositif-relais connecté au second dispositif (T2),
b') le second dispositif (T2), respectivement le dispositif-relais connecté au second dispositif (T2), crée dans au moins un tel traducteur d'adresse réseau et/ou pare-feu une entrée comprenant au moins une adresse IP et/ou au moins un numéro de port du second dispositif (T2), et
c') le second dispositif (T1), respectivement le dispositif-relais connecté au second dispositif (T2), transmet au premier dispositif (T1) ladite au moins une adresse IP et/ou ledit au moins un numéro de port, dans une option TCP.

5. Procédé de communication selon l'une quelconque des revendications 1 à 4, **caractérisé en ce qu'**il comprend en outre une étape au cours de laquelle le premier dispositif (T1) ou le second dispositif (T2) transmet à l'autre dispositif une option TCP (TRUST) indiquant à l'autre dispositif qu'il peut utiliser à tout moment une adresse IP et/ou un numéro de port, qui ont été précédemment communiqués audit autre dispositif par le premier dispositif (T1) ou le second dispositif (T2), pour créer de nouvelles sous-sessions associées à une connexion TCP en cours entre le premier dispositif (T1) et le second dispositif (T2) ou pour tout autre besoin de gestion de ladite connexion TCP en cours entre le premier dispositif (T1) et le second dispositif (T2).

6. Procédé de communication selon l'une quelconque des revendications 1 à 5, **caractérisé en ce qu'**il comprend en outre une étape au cours de laquelle le premier dispositif (T1) ou le second dispositif (T2) transmet à l'autre dispositif une option TCP (TRU_ADD) indiquant à l'autre dispositif qu'il peut utiliser à tout moment une adresse IP et/ou un numéro de port, mentionnés dans cette option TCP (TRU_ADD), pour créer de nouvelles sous-sessions associées à une connexion TCP en cours entre le premier dispositif (T1) et le second dispositif (T2) ou pour tout autre besoin de gestion de ladite connexion TCP en cours entre le premier dispositif (T1) et le second dispositif (T2).

7. Procédé de communication selon la revendication 6, **caractérisé en ce que** ladite option TCP (TRU_ADD) comprend en outre une durée de vie (Lifetime) associée aux informations contenues dans cette option TCP (TRU_ADD).

8. Procédé de communication selon l'une quelconque des revendications 1 à 7, **caractérisé en ce qu'**il comprend en outre une étape au cours de laquelle le premier dispositif (T1) ou le second dispositif (T2) transmet à l'autre dispositif une option TCP (LIFETIME) indiquant une durée de vie associée à une adresse IP et/ou un numéro de port précédemment communiqués audit autre dispositif.

9. Procédé de communication TCP, Transmission Control Protocol, entre un premier dispositif (T1) et un second dispositif (T2), comprenant les étapes suivantes :
- ledit second dispositif (T2) reçoit de la part dudit premier dispositif (T1) ou d'un dispositif-relais (R) connecté au premier dispositif (T1)
• une option TCP (TRU_ADD) mentionnant une adresse IP et/ou un numéro de port, et indiquant au second dispositif (T2) qu'il peut utiliser à tout moment sans échec ladite adresse IP et/ou ledit numéro de port pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet ; ou
• une option TCP (TRUST) faisant référence à une adresse IP et/ou à un numéro de port précédemment communiqués au second dispositif (T2) par le premier dispositif (T1) ou ledit dispositif-relais (R) et indiquant au second dispositif (T2) qu'il peut utiliser à tout moment sans échec ladite adresse IP et/ou ledit numéro de port précédemment communiqués pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet, et
- le second dispositif (T2) met à jour une table de connexions TCP en renseignant un attribut (RELIABILITY) indiquant une fiabilité de ladite adresse et/ou ledit numéro de port, ledit second dispositif (T2) pouvant utiliser à tout moment sans échec ladite adresse et/ou ledit numéro de port pour créer de nouvelles sous-sessions associées à une connexion TCP en cours entre le premier dispositif (T1) et le second dispositif (T2) ou pour tout autre besoin de gestion de ladite connexion TCP en cours entre le premier dispositif (T1) et le second dispositif (T2).

10. Dispositif communicant compatible avec les communications TCP, Transmission Control Protocol, ledit dispositif communicant étant un premier dispositif (T1) ou un dispositif-relais (R) connecté à un premier dispositif (T1), ledit dispositif communicant étant **caractérisé en ce qu'**il possède des moyens pour :
- collecter des informations concernant l'existence éventuelle de traducteurs d'adresse réseau et/ou de pare-feux placés en coupure de flux sur au moins un chemin de communication possible entre le premier dispositif (T1) et un second dispositif (T2) et connu dudit dispositif communicant,
- créer dans au moins un tel traducteur d'adresse réseau et/ou pare-feu une entrée comprenant au moins une adresse IP et/ou au moins un numéro de port dudit premier dispositif (T1), et
- transmettre audit second dispositif (T2)
• une option TCP (TRU_ADD) mentionnant ladite au moins une adresse IP et/ou ledit au moins un numéro de port, et indiquant au second dispositif (T2) qu'il peut utiliser à tout moment sans échec ladite adresse IP et/ou ledit numéro de port pour créer de nouvelles sous-sessions associées à une connexion TCP en cours entre le premier dispositif (T1) et le second dispositif (T2) ou pour tout autre besoin de gestion de ladite connexion TCP en cours entre le premier dispositif (T1) et le second dispositif (T2), des dispositions particulières ayant été prises à cet effet, ou
• une option TCP (TRUST) indiquant au second dispositif (T2) qu'il peut utiliser à tout moment sans échec ladite au moins une adresse IP et/ou ledit au moins un numéro de port, qui ont été précédemment communiqués au second dispositif (T2) par ledit dispositif communicant, pour créer de nouvelles sous-sessions associées à une connexion TCP en cours entre le premier dispositif (T1) et le second dispositif (T2) ou pour tout autre besoin de gestion de ladite connexion TCP en cours entre le premier dispositif (T1) et le second dispositif (T2), des dispositions particulières ayant été prises à cet effet.

11. Dispositif communicant dit second dispositif, compatible avec les communications TCP, Transmission Control Protocol, **caractérisé en ce qu'**il possède des moyens pour :
- recevoir de la part d'un premier dispositif (T1) ou d'un dispositif-relais (R) connecté à un premier dispositif :
• une option TCP (TRU_ADD) mentionnant une adresse IP et/ou un numéro de port et indiquant au second dispositif (T2) qu'il peut utiliser à tout moment sans échec ladite adresse IP et/ou ledit numéro de port pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet, ou
• une option TCP (TRUST) faisant référence à une adresse IP et/ou à un numéro de port précédemment communiqués audit dispositif communicant par ledit autre dispositif ou par ledit dispositif-relais et indiquant au second dispositif (T2) qu'il peut utiliser à tout moment sans échec ladite adresse IP et/ou ledit numéro de port précédemment communiqués pour créer de nouvelles sous-sessions associées à une connexion TCP en cours avec le premier dispositif (T1) ou pour tout autre besoin de gestion de ladite connexion TCP en cours avec le premier dispositif (T1), des dispositions particulières ayant été prises à cet effet, et
- mettre à jour une table de connexions TCP en renseignant un attribut (RELIABILITY) indiquant une fiabilité de ladite adresse et/ou ledit numéro de port, ledit second dispositif pouvant utiliser à tout moment sans échec ladite adresse et/ou ledit numéro de port pour créer de nouvelles sous-sessions associées à une connexion TCP en cours avec l'autre dispositif ou pour tout autre besoin de gestion de ladite connexion TCP en cours avec le premier dispositif.

12. Moyen de stockage de données inamovible, ou partiellement ou totalement amovible, comportant des instructions de code de programme informatique pour l'exécution des étapes d'un procédé de communication selon l'une quelconque des revendications 1 à 9.

13. Programme d'ordinateur téléchargeable depuis un réseau de communications et/ou exécutable par un microprocesseur, **caractérisé en ce qu'**il comprend des instructions pour l'exécution des étapes d'un procédé de communication selon l'une quelconque des revendications 1 à 9, lorsqu'il est exécuté sur un ordinateur.

## Patentansprüche

1. Verfahren zur TCP, Transmission Control Protocol, - Kommunikation zwischen einer ersten Vorrichtung (T1) und einer zweiten Vorrichtung (T2), umfassend die folgenden Schritte:
a) die erste Vorrichtung (T1), beziehungsweise eine Relaisvorrichtung (R), die mit der ersten Vorrichtung (T1) verbunden ist, sammelt Informationen bezüglich des eventuellen Vorhandenseins von Netzwerkadressen-Übersetzern und/oder Firewalls, die im Strom auf mindestens einem Kommunikationsweg platziert sind, der zwischen der ersten Vorrichtung (T1) und der zweiten Vorrichtung (T2) möglich ist und der ersten Vorrichtung (T1) beziehungsweise der Relaisvorrichtung (R) bekannt ist,
b) die erste Vorrichtung (T1) beziehungsweise die Relaisvorrichtung (R) erstellt in mindestens einem derartigen Netzwerkadressen-Übersetzer und/oder einer derartigen Firewall einen Eintrag, der mindestens eine IP-Adresse und/oder mindestens eine Portnummer der ersten Vorrichtung (T1) umfasst, und
c) die erste Vorrichtung (T1) beziehungsweise die Relaisvorrichtung (R) überträgt an die zweite Vorrichtung (T2)
• eine TCP-Option (TRU_ADD), die die mindestens eine IP-Adresse und/oder die mindestens eine Portnummer nennt und der zweiten Vorrichtung (T2) angibt, dass sie jederzeit ohne Fehler die IP-Adresse und/oder die Portnummer zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden, oder
• eine TCP-Option (TRUST), die der zweiten Vorrichtung (T2) angibt, dass sie jederzeit ohne Fehler die mindestens eine IP-Adresse und/oder die mindestens eine Portnummer, die zuvor von der ersten Vorrichtung (T1) beziehungsweise der Relaisvorrichtung (R) an die zweite Vorrichtung (T2) kommuniziert wurden, zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden.

2. Kommunikationsverfahren nach Anspruch 1, **dadurch gekennzeichnet, dass** die erste Vorrichtung (T1) vor dem Schritt a) eine TCP-Verbindung mit der zweiten Vorrichtung (T2) initialisiert.

3. Kommunikationsverfahren nach Anspruch 1, **dadurch gekennzeichnet, dass** die erste Vorrichtung (T1) zwischen dem Schritt b) und dem Schritt c) eine TCP-Verbindung mit der zweiten Vorrichtung (T2) initialisiert.

4. Kommunikationsverfahren nach einem der Ansprüche 1 bis 3, **dadurch gekennzeichnet, dass** es ferner die folgenden Schritte umfasst:
a') die zweite Vorrichtung (T2), beziehungsweise eine Relaisvorrichtung, die mit der zweiten Vorrichtung (T2) verbunden ist, sammelt Informationen bezüglich des eventuellen Vorhandenseins von Netzwerkadressen-Übersetzern und/oder Firewalls, die im Strom auf mindestens einem Kommunikationsweg platziert sind, der zwischen der ersten Vorrichtung (T1) und der zweiten Vorrichtung (T2) möglich ist und der zweiten Vorrichtung (T2) beziehungsweise der Relaisvorrichtung, die mit der zweiten Vorrichtung (T2) verbunden ist, bekannt ist,
b') die zweite Vorrichtung (T2) beziehungsweise die Relaisvorrichtung, die mit der zweiten Vorrichtung (T2) verbunden ist, erstellt in mindestens einem derartigen Netzwerkadressen-Übersetzer und/oder einer derartigen Firewall einen Eintrag, der mindestens eine IP-Adresse und/oder mindestens eine Portnummer der zweiten Vorrichtung (T2) umfasst, und
c') die zweite Vorrichtung (T1) beziehungsweise die Relaisvorrichtung, die mit der zweiten Vorrichtung (T2) verbunden ist, überträgt an die erste Vorrichtung (T1) die mindestens eine IP-Adresse und/oder die mindestens eine Portnummer in einer TCP-Option.

5. Kommunikationsverfahren nach einem der Ansprüche 1 bis 4, **dadurch gekennzeichnet, dass** es ferner einen Schritt umfasst, in dessen Verlauf die erste Vorrichtung (T1) oder die zweite Vorrichtung (T2) an die andere Vorrichtung eine TCP-Option (TRUST) überträgt, die der anderen Vorrichtung angibt, dass sie jederzeit eine IP-Adresse und/oder eine Portnummer, die zuvor von der ersten Vorrichtung (T1) oder der zweiten Vorrichtung (T2) an die andere Vorrichtung kommuniziert wurden, zur Erstellung neuer Untersitzungen, die einer laufenden TCP-Verbindung zwischen der ersten Vorrichtung (T1) und der zweiten Vorrichtung (T2) zugeordnet sind, oder für beliebige andere Verwaltungsbedarfe der laufenden TCP-Verbindung zwischen der ersten Vorrichtung (T1) und der zweiten Vorrichtung (T2) nutzen kann.

6. Kommunikationsverfahren nach einem der Ansprüche 1 bis 5, **dadurch gekennzeichnet, dass** es ferner einen Schritt umfasst, in dessen Verlauf die erste Vorrichtung (T1) oder die zweite Vorrichtung (T2) an die andere Vorrichtung eine TCP-Option (TRU_ADD) überträgt, die der anderen Vorrichtung angibt, dass sie jederzeit eine IP-Adresse und/oder eine Portnummer, die in dieser TCP-Option (TRU_ADD) genannt sind, zur Erstellung neuer Untersitzungen, die einer laufenden TCP-Verbindung zwischen der ersten Vorrichtung (T1) und der zweiten Vorrichtung (T2) zugeordnet sind, oder für beliebige andere Verwaltungsbedarfe der laufenden TCP-Verbindung zwischen der ersten Vorrichtung (T1) und der zweiten Vorrichtung (T2) nutzen kann.

7. Kommunikationsverfahren nach Anspruch 6, **dadurch gekennzeichnet, dass** die TCP-Option (TRU_ADD) ferner eine Lebensdauer (Lifetime) umfasst, die den Informationen zugeordnet ist, die in dieser TCP-Option (TRU_ADD) enthalten sind.

8. Kommunikationsverfahren nach einem der Ansprüche 1 bis 7, **dadurch gekennzeichnet, dass** es ferner einen Schritt umfasst, in dessen Verlauf die erste Vorrichtung (T1) oder die zweite Vorrichtung (T2) an die andere Vorrichtung eine TCP-Option (LIFETIME) überträgt, die eine Lebensdauer angibt, die einer IP-Adresse und/oder einer Portnummer zugeordnet ist, die zuvor an die andere Vorrichtung kommuniziert wurden.

9. Verfahren zur TCP, Transmission Control Protocol, - Kommunikation zwischen einer ersten Vorrichtung (T1) und einer zweiten Vorrichtung (T2), umfassend die folgenden Schritte:
- die zweite Vorrichtung (T2) empfängt von der ersten Vorrichtung (T1) oder einer Relaisvorrichtung (R), die mit der ersten Vorrichtung (T1) verbunden ist
• eine TCP-Option (TRU_ADD), die eine IP-Adresse und/oder eine Portnummer nennt und der zweiten Vorrichtung (T2) angibt, dass sie jederzeit ohne Fehler die IP-Adresse und/oder die Portnummer zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden; oder
• eine TCP-Option (TRUST), die auf eine IP-Adresse und/oder eine Portnummer verweist, die zuvor von der ersten Vorrichtung (T1) oder der Relaisvorrichtung (R) an die zweite Vorrichtung (T2) kommuniziert wurden, und der zweiten Vorrichtung (T2) angibt, dass sie jederzeit ohne Fehler die IP-Adresse und/oder die Portnummer, die zuvor kommuniziert wurden, zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden, und
- die zweite Vorrichtung (T2) aktualisiert eine Tabelle mit TCP-Verbindungen, indem sie ein Attribut (RELIABILITY) mitteilt, das eine Zuverlässigkeit der Adresse und/oder der Portnummer angibt, wobei die zweite Vorrichtung (T2) jederzeit ohne Fehler die Adresse und/oder die Portnummer zur Erstellung neuer Untersitzungen, die einer laufenden TCP-Verbindung zwischen der ersten Vorrichtung (T1) und der zweiten Vorrichtung (T2) zugeordnet sind, oder für beliebige andere Verwaltungsbedarfe der laufenden TCP-Verbindung zwischen der ersten Vorrichtung (T1) und der zweiten Vorrichtung (T2) nutzen kann.

10. Kommunizierende Vorrichtung, die mit TCP, Transmission Control Protocol, -Kommunikationen kompatibel ist, wobei die kommunizierende Vorrichtung eine erste Vorrichtung (T1) ist, oder eine Relaisvorrichtung (R), die mit einer ersten Vorrichtung (T1) verbunden ist, wobei die kommunizierende Vorrichtung **dadurch gekennzeichnet ist, dass** sie Mittel aufweist, um:
- Informationen bezüglich des eventuellen Vorhandenseins von Netzwerkadressen-Übersetzern und/oder Firewalls zu sammeln, die im Strom auf mindestens einem Kommunikationsweg platziert sind, der zwischen der ersten Vorrichtung (T1) und einer zweiten Vorrichtung (T2) möglich ist und der kommunizierenden Vorrichtung bekannt ist,
- in mindestens einem derartigen Netzwerkadressen-Übersetzer und/oder einer derartigen Firewall einen Eintrag zu erstellen, der mindestens eine IP-Adresse und/oder mindestens eine Portnummer der ersten Vorrichtung (T1) umfasst, und
- Folgendes an die zweite Vorrichtung (T2) zu übertragen
• eine TCP-Option (TRU_ADD), die die mindestens eine IP-Adresse und/oder die mindestens eine Portnummer nennt und der zweiten Vorrichtung (T2) angibt, dass sie jederzeit ohne Fehler die IP-Adresse und/oder die Portnummer zur Erstellung neuer Untersitzungen, die einer laufenden TCP-Verbindung zwischen der ersten Vorrichtung (T1) und der zweiten Vorrichtung (T2) zugeordnet sind, oder für beliebige andere Verwaltungsbedarfe der laufenden TCP-Verbindung zwischen der ersten Vorrichtung (T1) und der zweiten Vorrichtung (T2) nutzen kann, wobei besondere Vorkehrungen zu diesem Zweck getroffen wurden, oder
• eine TCP-Option (TRUST), die der zweiten Vorrichtung (T2) angibt, dass sie jederzeit ohne Fehler die mindestens eine IP-Adresse und/oder die mindestens eine Portnummer, die zuvor von der kommunizierenden Vorrichtung an die zweite Vorrichtung (T2) kommuniziert wurden, zur Erstellung neuer Untersitzungen, die einer laufenden TCP-Verbindung zwischen der ersten Vorrichtung (T1) und der zweiten Vorrichtung (T2) zugeordnet sind, oder für beliebige andere Verwaltungsbedarfe der laufenden TCP-Verbindung zwischen der ersten Vorrichtung (T1) und der zweiten Vorrichtung (T2) nutzen kann, wobei besondere Vorkehrungen zu diesem Zweck getroffen wurden.

11. Kommunizierende, zweite Vorrichtung, die mit TCP, Transmission Control Protocol, -Kommunikationen kompatibel ist, **dadurch gekennzeichnet, dass** sie Mittel aufweist, um:
- von einer ersten Vorrichtung (T1) oder einer Relaisvorrichtung (R), die mit einer ersten Vorrichtung verbunden ist, Folgendes zu empfangen:
• eine TCP-Option (TRU_ADD), die eine IP-Adresse und/oder eine Portnummer nennt und der zweiten Vorrichtung (T2) angibt, dass sie jederzeit ohne Fehler die IP-Adresse und/oder die Portnummer zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden, oder
• eine TCP-Option (TRUST), die auf eine IP-Adresse und/oder eine Portnummer verweist, die zuvor von der anderen Vorrichtung oder der Relaisvorrichtung an die kommunizierende Vorrichtung kommuniziert wurden, und der zweiten Vorrichtung (T2) angibt, dass sie jederzeit ohne Fehler die IP-Adresse und/oder die Portnummer, die zuvor kommuniziert wurden, zur Erstellung neuer Untersitzungen, die einer laufenden TCP-Verbindung mit der ersten Vorrichtung (T1) zugeordnet sind, oder für beliebige andere Verwaltungsbedarfe der laufenden TCP-Verbindung mit der ersten Vorrichtung (T1) nutzen kann, wobei besondere Vorkehrungen zu diesem Zweck getroffen wurden, und
- eine Tabelle mit TCP-Verbindungen zu aktualisieren, indem sie ein Attribut (RELIABILITY) mitteilt, das eine Zuverlässigkeit der Adresse und/oder der Portnummer angibt, wobei die zweite Vorrichtung jederzeit ohne Fehler die Adresse und/oder die Portnummer zur Erstellung neuer Untersitzungen, die einer laufenden TCP-Verbindung mit der anderen Vorrichtung zugeordnet sind, oder für beliebige andere Verwaltungsbedarfe der laufenden TCP-Verbindung mit der ersten Vorrichtung nutzen kann.

12. Nicht, teilweise oder vollständig entfernbares Datenspeichermittel, aufweisend Computerprogrammcode-Anweisungen zur Ausführung der Schritte eines Kommunikationsverfahrens nach einem der Ansprüche 1 bis 9.

13. Computerprogramm, das aus einem Kommunikationsnetzwerk herunterladbar und/oder von einem Mikroprozessor ausführbar ist, **dadurch gekennzeichnet, dass** es Anweisungen zur Ausführung der Schritte eines Kommunikationsverfahrens nach einem der Ansprüche 1 bis 9, wenn es auf einem Computer ausgeführt wird, umfasst.

## Claims

1. Method for TCP, Transmission Control Protocol, communication between a first device (T1) and a second device (T2), comprising the following steps:
a) said first device (T1) or a relay device (R) connected to the first device (T1), respectively, collects information relating to the possible existence of network address translators and/or firewalls placed in cut-through configuration of the flows on at least one possible communication path between the first device (T1) and said second device (T2), which communication path is known to the first device (T1) or to said relay device (R), respectively,
b) the first device (T1) or the relay device (R), respectively, creates, in at least one such network address translator and/or firewall, an entry comprising at least one IP address and/or at least one port number of the first device (T1), and
c) the first device (T1) or the relay device (R), respectively, transmits, to the second device (T2)
• a TCP option (TRU_ADD) mentioning said at least one IP address and/or said at least one port number, and indicating to the second device (T2) that the latter may use said IP address and/or said port number at any time without failure to create new sub-sessions associated with an ongoing TCP connection with the first device (T1) or for any other requirement for the management of said ongoing TCP connection with the first device (T1), specific measures having been taken to this end, or
• a TCP option (TRUST) indicating to the second device (T2) that the latter may use at any time without failure said at least one IP address and/or said at least one port number, which have previously been communicated to the second device (T2) by the first device (T1) or the relay device (R), respectively, to create new sub-sessions associated with an ongoing TCP connection with the first device (T1) or for any other requirement for the management of said ongoing TCP connection with the first device (T1), specific measures having been taken to this end.

2. Communication method according to Claim 1, **characterized in that** said first device (T1) initializes a TCP connection with said second device (T2) before said step a).

3. Communication method according to Claim 1, **characterized in that** said first device (T1) initializes a TCP connection with said second device (T2) between said step b) and said step c).

4. Communication method according to any one of Claims 1 to 3, **characterized in that** it further comprises the following steps:
a') said second device (T2) or a relay device connected to the second device (T2), respectively, collects information relating to the possible existence of network address translators and/or firewalls placed in cut-through configuration of the flows on at least one possible communication path between the first device (T1) and the second device (T2), which communication path is known to the second device (T2) or to said relay device connected to the second device (T2), respectively,
b') the second device (T2) or the relay device connected to the second device (T2), respectively, creates, in at least one such network address translator and/or firewall, an entry comprising at least one IP address and/or at least one port number of the second device (T2), and
c') the second device (T1) or the relay device connected to the second device (T2), respectively, transmits said at least one IP address and/or said at least one port number to the first device (T1) in a TCP option.

5. Communication method according to any one of Claims 1 to 4, **characterized in that** it further comprises a step during which the first device (T1) or the second device (T2) transmits, to the other device, a TCP option (TRUST) indicating to the other device that the latter may use at any time an IP address and/or a port number, which have previously been communicated to said other device by the first device (T1) or the second device (T2), to create new sub-sessions associated with an ongoing TCP connection between the first device (T1) and the second device (T2) or for any other requirement for the management of said ongoing TCP connection between the first device (T1) and the second device (T2).

6. Communication method according to any one of Claims 1 to 5, **characterized in that** it further comprises a step during which the first device (T1) or the second device (T2) transmits, to the other device, a TCP option (TRU_ADD) indicating to the other device that the latter may use at any time an IP address and/or a port number mentioned in this TCP option (TRU_ADD) to create new sub-sessions associated with an ongoing TCP connection between the first device (T1) and the second device (T2) or for any other requirement for the management of said ongoing TCP connection between the first device (T1) and the second device (T2).

7. Communication method according to Claim 6, **characterized in that** said TCP option (TRU_ADD) further comprises a lifetime (Lifetime) associated with the information contained in this TCP option (TRU_ADD).

8. Communication method according to any one of Claims 1 to 7, **characterized in that** it further comprises a step during which the first device (T1) or the second device (T2) transmits, to the other device, a TCP option (LIFETIME) indicating a lifetime associated with an IP address and/or a port number previously communicated to said other device.

9. Method for TCP, Transmission Control Protocol, communication between a first device (T1) and a second device (T2), comprising the following steps:
- said second device (T2) receives, from said first device (T1) or from a relay device (R) connected to the first device (T1)
• a TCP option (TRU_ADD) mentioning an IP address and/or a port number, and indicating to the second device (T2) that the latter may use said IP address and/or said port number at any time without failure to create new sub-sessions associated with an ongoing TCP connection with the first device (T1) or for any other requirement for the management of said ongoing TCP connection with the first device (T1), specific measures having been taken to this end; or
• a TCP option (TRUST) referring to an IP address and/or a port number previously communicated to the second device (T2) by the first device (T1) or said relay device (R) and indicating to the second device (T2) that the latter may use at any time without failure said IP address and/or said port number, which have previously been communicated, to create new sub-sessions associated with an ongoing TCP connection with the first device (T1) or for any other requirement for the management of said ongoing TCP connection with the first device (T1), specific measures having been taken to this end, and
- the second device (T2) updates a table of TCP connections by providing an attribute (RELIABILITY) indicating a reliability of said address and/or said port number, said second device (T2) being able to use said address and/or said port number at any time without failure to create new sub-sessions associated with an ongoing TCP connection between the first device (T1) and the second device (T2) or for any other requirement for the management of said ongoing TCP connection between the first device (T1) and the second device (T2).

10. Communicating device compatible with TCP, Transmission Control Protocol, communications, said communicating device being a first device (T1) or a relay device (R) connected to a first device (T1), said communicating device being **characterized in that** it has means for:
- collecting information relating to the possible existence of network address translators and/or firewalls placed in cut-through configuration of the flows on at least one possible communication path between the first device (T1) and a second device (T2), which communication path is known to said communicating device,
- creating, in at least one such network address translator and/or firewall, an entry comprising at least one IP address and/or at least one port number of said first device (T1), and
- transmitting, to said second device (T2)
• a TCP option (TRU_ADD) mentioning said at least one IP address and/or said at least one port number, and indicating to the second device (T2) that the latter may use said IP address and/or said port number at any time without failure to create new sub-sessions associated with an ongoing TCP connection between the first device (T1) and the second device (T2) or for any other requirement for the management of said ongoing TCP connection between the first device (T1) and the second device (T2), specific measures having been taken to this end, or
• a TCP option (TRUST) indicating to the second device (T2) that the latter may use at any time without failure said at least one IP address and/or said at least one port number, which have previously been communicated to the second device (T2) by said communicating device, to create new sub-sessions associated with an ongoing TCP connection between the first device (T1) and the second device (T2) or for any other requirement for the management of said ongoing TCP connection between the first device (T1) and the second device (T2), specific measures having been taken to this end.

11. Communicating device known as a second device, compatible with TCP, Transmission Control Protocol, communications, **characterized in that** it has means for:
- receiving, from a first device (T1) or from a relay device (R) connected to a first device:
• a TCP option (TRU_ADD) mentioning an IP address and/or a port number, and indicating to the second device (T2) that the latter may use said IP address and/or said port number at any time without failure to create new sub-sessions associated with an ongoing TCP connection with the first device (T1) or for any other requirement for the management of said ongoing TCP connection with the first device (T1), specific measures having been taken to this end, or
• a TCP option (TRUST) referring to an IP address and/or a port number previously communicated to said communicating device by said other device or said relay device and indicating to the second device (T2) that the latter may use at any time without failure said IP address and/or said port number, which have previously been communicated, to create new sub-sessions associated with an ongoing TCP connection with the first device (T1) or for any other requirement for the management of said ongoing TCP connection with the first device (T1), specific measures having been taken to this end, and
- updating a table of TCP connections by providing an attribute (RELIABILITY) indicating a reliability of said address and/or said port number, said second device being able to use said address and/or said port number at any time without failure to create new sub-sessions associated with an ongoing TCP connection with the other device or for any other requirement for the management of said ongoing TCP connection with the first device.

12. Irremovable, or partially or completely removable, data storage means including computer program code instructions for executing the steps of a communication method according to any one of Claims 1 to 9.

13. Computer program that is downloadable from a communication network and/or executable by a microprocessor, **characterized in that** it comprises instructions for executing the steps of a communication method according to any one of Claims 1 to 9 when it is executed on a computer.
